# EUROPÄISCHE PATENTSCHRIFT

(11) **EP 1 844 936 B1**
(45) Veröffentlichungstag und Bekanntmachung des Hinweises auf die Patenterteilung: **14.07.2010**
(21) Anmeldenummer: 07007535.3
(22) Anmeldetag: 12.04.2007
(51) Int. Cl.: B41J 2/14

(54) **Mikroaktor, Verfahren zum Bewegen eines Fluids und Verfahren zum Herstellen eines Mikroaktors**
Micro-actuator, method for displacing a fluid and method for manufacturing a micro-actuator
Microactionneur, procédé pour déplacer un fluide et procédé de fabrication d'un microactionneur

(30) Priorität: 13.04.2006 DE 102006017482
(43) Veröffentlichungstag der Anmeldung: 17.10.2007
(73) Patentinhaber: Technische Universität Chemnitz, 09111 Chemnitz (DE)
(72) Erfinder: Nestler, Jörg, 09126 Chemnitz (DE); Hiller, Karla, 08294 Lößnitz (DE); Otto, Thomas, 09249 Taura/OT Köthensdorf (DE); Gessner, Thomas, 09113 Chemnitz (DE)
(74) Vertreter: Grünecker, Kinkeldey, Stockmair & Schwanhäusser Anwaltssozietät

(56) Entgegenhaltungen:
- EP-A- 1 442 887
- DE-A1- 10 157 317
- DE-A1-102004 062 893
- US-A1- 2003 196 900
- US-A1- 2005 052 502

## Beschreibung

Die vorliegende Erfindung betrifft einen Mikroaktor und ein Verfahren zum Herstellen eines Mikroaktors zum Bewegen eines Fluids und zur Steuerung der Bewegung eines Fluids sowie ein Verfahren zum Bewegen eines Fluids und zur Steuerung der Bewegung eines Fluids mit einem Mikroaktor mit einer zumindest teilweise Wasser enthaltenden Aktorflüssigkeit.

Mikroaktoren der oben genannten Gattung sind im Stand der Technik als Mikroblasen-Aktoren bekannt, bei welchen in der Aktorflüssigkeit erzeugte Mikroblasen zur Erzeugung einer Aktorwirkung benutzt werden. Solche Mikroblasen können beispielsweise durch lokale Erhitzung der Aktorflüssigkeit in Form thermischer Mikroblasen erzeugt werden. Jedoch ist die Erzeugung thermischer Blasen mit dem Einsatz von hohen Temperaturen, beispielsweise >100°C für Wasser bei atmosphärischem Druck, verbunden, welche für biologische Anwendungen mit lebenden Zellen oder Proteinmolekülen meist nicht zulässig sind.

Gemäß einem anderen Aktorkonzept sind Blasen in einer Wasser enthaltenden Flüssigkeit mittels einer Elektrolyse erzeugbar. Werden bei dieser Variante Elektroden in die Aktorflüssigkeit eingebracht und diese elektrisch angeschlossen, erfolgen an den Elektroden folgende Reaktionen:
Anode (+):

   2H₂O → O₂ + 4H⁺ + 4e⁻
Katode (-):

   2H₂O + 2e⁻ → H₂ + 2OH⁻.

Es entstehen hierbei Sauerstoff- und Wasserstoff-Blasen, welche für Aktorikzwecke benutzt werden können, wobei für die Blasenbildung mittels Elektrolyse weder eine hohe Temperatur noch ein hoher Energieverbrauch nötig ist.

Die Druckschrift US 200310196900 A1 offenbart eine Mikropumpe, die durch ein Ausdehnen bzw. Zusammenziehen eines Hydrogels betrieben wird, wobei durch die jeweilige Volumenänderung des Hydrogels Membranen deformiert werden und damit ein Fluid angetrieben wird. Um dies zu erreichen, wird mittels einer Elektrophorese ein Fluid zwischen zwei Pumpenkammern hin- und herbewegt, wodurch sich die Flüssigkeitsabsorption des jeweils in den Kammern befindlichen Hydrogels ändert und damit das Hydrogel deformiert. Entsprechend können in Abhängigkeit von der an das elektrophoretische Fluid angelegten Spannung die an den Pumpenkammern vorgesehenen Membranen expandiert oder kontrahiert werden.

Die Druckschrift EP 1 442 887 A1 beschreibt einen Tröpfchenabscheider, bei welchem ein durch außen anliegende Elektroden stimulierbares Hydrogel dazu gebracht wird, zu expandieren, um hierdurch Flüssigkeit durch eine am Abscheider vorgesehene Düse in Tröpfchenform nach außen zu drücken. Neben einer Stimulanz durch ein elektrisches Feld können auch andere Hydrogele eingesetzt werden, die beispielsweise temperatur-, pH- oder lichtsensitiv sind oder auf molekulare Konzentrationen reagieren.

Die Druckschrift DE 101 57 317 A1 offenbart einen Mikrofluidikprozessor, in welchem der Quellungsgrad eines Hydrogels in Abhängigkeit äußerer Einflussgrößen, wie Temperatur oder Licht bestimmter Wellenlängen, genutzt wird, um ein Aktorprinzip zu verwirklichen.

Die Druckschrift US 2005/0052502 A1 beschreibt einen Mikroaktor der oben genannten Gattung, bei welchem thermisch erzeugte Blasen als mikrofluidisches Aktorprinzip verwendet werden. Hierfür sind mehrere Kammern in einer dicken Schicht aus Fotolack oberhalb mehrerer Heizelemente vorgesehen. Die Kammern sind mit einer Membran abgedeckt. Durch einen Einlass kann Flüssigkeit mit einem geringen Siedepunkt in die Kammern geleitet werden. Wird die Flüssigkeit mit den Heizelementen erhitzt, bilden sich thermische Blasen, welche die Membran nach oben bewegen bzw. das Volumen der Kammern erhöhen. Die nach oben gedrückte Membran wirkt wiederum auf ein mit dem mikrofluidischen Aktor mittelbar oder unmittelbar in Verbindung stehendes zu bewegendes Fluid, wobei das Fluid in Richtung eines Fluidausgangs gedrückt wird.

Sowohl die oben beschriebenen Grundprinzipien der Nutzung einer Erzeugung von Gasblasen in Aktoren als auch der in der Druckschrift US 2005/0052502 A1 beschriebene mikrofluidische Aktor besitzen den Nachteil, dass die zur Blasenbildung erforderlichen Flüssigkeiten nur schwer bzw. gar nicht in den beschriebenen Aktoren integrierbar sind. Vielmehr muss die Aktorflüssigkeit über entsprechende Kanäle nach Fertigstellung der Mikroaktoren in entsprechende Kammern eingebracht werden, was gerade bei Mikroaktoren mit kleinen Kammerabmessungen mit großen Schwierigkeiten verbunden sein kann. Alternative Lösungsansätze, bei denen das zu bewegende Fluid selbst als Aktorfluid dient, indem in ihm Blasen mittels Elektrolyse oder thermisch erzeugt werden, verändern das zu bewegende Fluid und eignen sich daher insbesondere nicht für analytische Anwendungen.

Es ist daher die Aufgabe der vorliegenden Erfindung, einen Mikroaktor, ein Verfahren zum Bewegen eines Fluids mit einem Mikroaktor, ein Verfahren zur Steuerung der Bewegung eines Fluids mit einem Mikroaktor sowie ein Herstellungsverfahren für einen Mikroaktor zur Verfügung zu stellen, mit welchen ein Aktorprinzip unter Erzeugung von Gasblasen genutzt werden kann und auf einfache Weise die für die Umsetzung des Aktorprinzips notwendigen Aktorkomponenten auf kleinem Raum integrierbar sind.

Die erfindungsgemäße Aufgabe wird durch einen Mikroaktor mit den Merkmalen des unabhängigen Patentanspruchs 1 gelöst.

Mit dem flüssigkeitsabsorbierenden Material kann die Aktorflüssigkeit, zumindest zeitweise, festgehalten werden und damit an einer geeigneten Stelle des Mikroaktors positioniert und dort integriert werden, wodurch ein Befüllen des Mikroaktors mit der Aktorflüssigkeit nach der Herstellung des Mikroaktors nicht nötig ist.

Gemäß einer bevorzugten Ausführungsform der Erfindung ist das flüssigkeitsabsorbierende Material ein Hydrogel. Hydrogele besitzen den Vorteil, dass sie durch eingebaute hydrophile Polymerkomponenten in Wasser unter beträchtlicher Volumenzunahme aufquellen und somit Wasser gut binden können. Zudem kann man ein Hydrogel vorteilhaft in einer mikromechanischen Komponente integrieren. Beispielsweise lässt sich ein Hydrogel in einem mikromechanischen Prozess auf einen Chip durch Rakeln in Kavitäten, im Siebdruckverfahren oder photolithographisch auf einfache Weise strukturiert aufbringen. Entsprechend ist es möglich, die für den Mikroaktor notwendige Aktorflüssigkeit in Form eines flüssigkeitsgetränkten Hydrogels in dem erfindungsgemäßen Mikroaktor vorzusehen.

Gemäß einem günstigen Beispiel der Erfindung basiert das Hydrogel auf einem superabsorbierenden Polymer. Superabsorbierende Polymere (SAP) sind in der Lage, ein Vielfaches ihres Eigengewichts an Flüssigkeiten aufzusaugen. Damit sind solche Superabsorber besonders gut geeignet, um für den erfindungsgemäßen Mikroaktor eine große Menge Aktorflüssigkeit an einem davor vorgesehenen Bereich des Mikroaktors zu speichern und für das Wirkprinzip des Mikroaktors zur Verfügung zu stellen.

Es hat sich als besonders vorteilhaft erwiesen, wenn das superabsorbierende Polymer Polyacrylsäure umfasst. Beispielsweise kann ein Superabsorber eingesetzt werden, der aus einem Copolymer aus Acrylsäure (Propensäure, C₃H₄O₂) und Natriumacrylat (Natriumsalz der Acrylsäure, NaC₃H₃O₂) besteht, wobei das Verhältnis der beiden Monomere zueinander variieren kann. Zusätzlich kann ein sogenannter Kemvemetzer (Core-Cross-Linker, CXL) der Monomerlösung zugesetzt werden, der die gebildeten langkettigen Polymermoleküle stellenweise untereinander durch chemische Brücken verbindet. Durch diese Brücken wird das Polymerwasser unlöslich. Beim Eindringen von Wasser bzw. der Aktorflüssigkeit in die Polyacrylsäure quillt diese auf und strafft auf molekularer Ebene das Netzwerk der Polymermoleküle, so dass Wasser nicht mehr ohne Hilfe entweichen kann. Somit ist Polyacrylsäure besonders gut geeignet, um die Aktorflüssigkeit an einer bestimmten Stelle des Mikroaktors zu integrieren.

Entsprechend einer weiteren vorteilhaften Variante der Erfindung umfasst das Hydrogel ein thermisch stimulierbares Hydrogel. Durch den Einsatz eines thermisch stimulierbaren bzw. thermisch sensiblen Hydrogels kann die Aktorflüssigkeit bei geringen oder Normaltemperaturen vorteilhaft in dem Mikroaktor gespeichert werden und bei erhöhten Temperaturen aus dem Hydrogel freigesetzt werden oder umgekehrt. Entsprechend einer speziellen Ausführungsform der Erfindung kann die thermisch freigesetzte Aktorflüssigkeit verwendet werden, um darin Blasen zu erzeugen, die die Aktorwirkung ermöglichen.

Entsprechend einer ganz besonders vorteilhaften Ausführungsform der Erfindung weist der Mikroaktor eine mit dem Fluid unmittelbar oder über ein weiteres Fluid, wie ein Gas oder eine Flüssigkeit, mittelbar in Kontakt stehende bewegliche Membran auf. Diese Membran kann benutzt werden, um die Wirkung der Aktorflüssigkeit oder einer darin stattfindenden Blasenbildung über die Membran auf das Fluid zu übertragen, um das Fluid zu bewegen oder die Fluidbewegung zu steuern.

Insbesondere kann die Steuerung des Fluids im zumindest teilweisen Verschließen eines Kanals bestehen. Auf diese Weise kann mit dem erfindungsgemäßen Mikroaktor eine Ventil- und/oder eine Pumpenwirkung erzielt werden.

Entsprechend einem Ausführungsbeispiel der Erfindung weist der Mikroaktor wenigstens eine bewegliche Ventilklappe auf, zwischen welcher und der Membran (7) ein Pumpenraum für das Fluid ausgebildet ist. Diese Ausführung ist besonders geeignet, um eine Membranpumpe auszubilden.

Hierbei hat es sich als besonders günstig erwiesen, den Mikroaktor so auszubilden, dass der Mikroaktor eine bei nicht gedehnter Membran in den Pumpenraum nach innen öffnende und bei gedehnter Membran einen Kanal schließende Ventilklappe, und eine bei gedehnter Membran einen Kanal schließende und bei nicht gedehnter Membran den Pumpenraum nach außen öffnende Ventilklappe aufweist. Somit kann eine wirkungsvolle Membranpumpe mit einem Einlass und einem Auslass für das Fluid bereitgestellt werden, welche mit der gleichen Membran geöffnet bzw. geschlossen werden können.

Gemäß einer bevorzugten Ausführungsform der Erfindung ist die Aktorflüssigkeit mit Elektroden elektrisch kontaktierbar. Auf diese Weise kann mit Hilfe der Elektroden eine Elektrolyse in der Aktorflüssigkeit bewirkt werden. Bei der Elektrolyse entstehen Sauerstoff- und Wasserstoffblasen, mit welchen das von dem Mikroaktor zu bewegende Fluid direkt oder mittelbar bewegt werden kann.

Entsprechend einem günstigen Beispiel der Erfindung ist das Hydrogel mit einem Katalysator gekoppelt. Der Katalysator kann dazu verwendet werden, bei dem elektrolytischen Aktorikprinzip eine Rückwärtsreaktion von Wasserstoff und Sauerstoff zu Wasser zu bewirken, das dann wieder in dem flüssigkeitsabsorbierenden Material des Mikroaktors speicherbar ist.

Beispielsweise können als Katalysator Platin oder Palladium eingesetzt werden. Somit kann ein Mikroaktor mit einer dynamischen Betriebsweise zur Verfügung gestellt werden.

Der Katalysator kann dabei sowohl als Schicht als auch als im flüssigkeitsabsorbierenden Material enthaltene Nano-, Mikro- oder Millimeter große Partikel ausgebildet sein.

Der Mikroaktor weist wenigstens ein Heizelement auf. Bei Verwendung eines derartigen Mikroaktors können in der in dem flüssigkeitsabsorbierenden Material eingebrachten Aktorflüssigkeit oder einer aus dem flüssigkeitsabsorbierenden Material freigesetzten Aktorflüssigkeit thermische Blasen erzeugt werden, die zur Realisierung der Aktorfunktionalität eingesetzt werden können. Die Aktorfunktionalität umfasst dabei sowohl die Bewegung eines zu bewegenden Fluids, als auch die Steuerung der Bewegung eines Fluids beispielsweise durch zumindest teilweises Verschließen eines Kanals.

Der erfindungsgemäße Mikroaktor kann vorteilhaft als Mikroaktor in einem Lab-on-Chip-System oder einem Point-of-Care-Diagnostik-System integriert werden. Auf diese Weise können integrierte bioanalytische Systeme, beispielsweise Systeme zur Untersuchung von flüssigen Proben, preiswert, mit hoher Effizienz und hoher Wirksamkeit zur Verfügung gestellt werden.

Die Aufgabe der Erfindung wird ferner durch ein Verfahren zum Bewegen eines Fluids mit einem Mikroaktor mit den Merkmalen des unabhängigen Patentanspruchs 12 gelöst. Hiermit kann die Aktorflüssigkeit an einer bestimmten Stelle des Mikroaktors festgehalten und im Bedarfsfall zur Verfügung gestellt werden, so dass der entsprechende Mikroaktor mit einer darin integrierten Aktorflüssigkeit bereitgestellt werden kann. Entsprechend entfällt bei dem erfindungsgemäßen Verfahren das aus dem Stand der Technik bekannte aufwändige Befüllen des Mikroaktors mit Aktorflüssigkeit beziehungsweise die Notwendigkeit zur Nutzung der zu bewegenden Flüssigkeit selbst für das Aktorprinzip. Stattdessen kann der Mikroaktor sofort für den jeweiligen Anwendungsfall eingesetzt werden und verändert nicht die zu bewegende Flüssigkeit

Es hat sich als besonders günstig erwiesen, die Aktorflüssigkeit in einem Hydrogel zu speichern. Hydrogele sind nicht nur in der Lage, Flüssigkeiten gut zu speichern, sondern geben diese im Bedarfsfall auch auf einfache Weise frei und sind zudem auf einfache Weise mittels herkömmlicher Verfahren auf oder in einem Chip integrierbar.

In der Aktorflüssigkeit wird mittels Elektrolyse wenigstens ein Gas erzeugt, mit welchem das Fluid direkt oder mittelbar bewegt wird. Durch eine in der Wasser enthaltenden Aktorflüssigkeit durchgeführten Elektrolyse entstehen Wasserstoff- und Sauerstoffblasen, die direkt oder mittelbar auf das Fluid zu dessen Bewegung eingesetzt werden können. Die Aktorwirkung kann auf einfache Weise durch Unterbrechen der Elektrolyse mittels Abschalten einer Stromversorgung beendet werden.

Alternativ wirkt das bei der Elektrolyse erzeugte Gas auf eine Membran des Mikroaktors. Die Membran dient dabei entweder zur unmittelbaren oder mittelbaren Bewegung des Fluids oder zur Steuerung der Bewegung eines Fluids z.B. durch zumindest teilweises Verschließen eines Kanals. Auf diese Weise kann die bei der Elektrolyse entstehende Gasbildung und eine daraus resultierende Volumenvergrößerung eines das Gas aufnehmenden Raumes in Verbindung mit einer Membran verwendet werden, um die Membran auszudehnen, so dass diese auf das Fluid wirkt. Somit kann eine direkte Wechselwirkung zwischen dem bei der Elektrolyse erzeugten Gas und dem zu bewegenden Fluid vermieden werden.

Es ist ganz besonders von Vorteil, wenn mit einem Katalysator eine Rückwärtsreaktion der bei der Elektrolyse entstehenden Gase zu Wasser bewirkt wird. Somit kann ein kontinuierlich arbeitendes Verfahren zum Bewegen des Fluids oder zur Kontrolle der Bewegung eines Fluids mit dem Mikroaktor zur Verfügung gestellt werden. Dies ermöglicht zum Beispiel sowohl eine Vorwärts- als auch eine Rückwärtsbewegung des zu bewegenden Fluids, sowie zum Beispiel auch sowohl ein Öffnen- als auch Schließen eines Ventils.

Entsprechend einer möglichen Variante der Erfindung wird das flüssigkeitsabsorbierende Material thermisch stimuliert. Somit kann beispielsweise die in dem flüssigkeitsabsorbierenden Material gespeicherte Aktorflüssigkeit von dem flüssigkeitsabsorbierenden Material freigesetzt und/oder zur thermischen Blasenbildung angeregt werden. Die Blasenbildung mittels thermischer Hilfsmittel kann sowohl allein als auch in Kombination mit einer mittels Elektrolyse erzeugten Gasblasenbildung zum Bewegen des Fluids mit dem Mikroaktor eingesetzt werden.

Die erfindungsgemäße Aufgabe wird weiterhin durch ein Verfahren zum Herstellen eines Mikroaktors mit den Merkmalen des unabhängigen Patentanspruchs 16 gelöst. Somit kann der Mikroaktor mit einem darin bzw. darauf integrierten, die Aktorflüssigkeit bereits enthaltenden Material hergestellt werden.

Vorteilhafterweise wird das flüssigkeitsabsorbierende Material in einem Siebdruckverfahren, einem Rakelverfahren oder photochemisch/photolithographisch auf einen Chip strukturiert oder unstrukturiert aufgebracht. Diese Verfahren sind in der Mikrotechnik verfügbare und häufig eingesetzte Verfahren, mit welchen das flüssigkeitsabsorbierende Material effizient und mit hoher Genauigkeit auf einen Chip aufgebracht werden kann. Entsprechend können mikrotechnische Chips, die das erfindungsgemäße Mikroaktorprinzip nutzen, auf einfache Weise in hoher Stückzahl gefertigt werden.

Das Substrat, auf dem das flüssigkeitsabsorbierende Material aufgebracht wird, kann aus einem beliebigen Material sein. Vorzugsweise wird jedoch Silizium, Glas, Keramik, Metall oder Kunststoff als Substratmaterial dienen.

In einer besonders vorteilhaften Ausführung des Verfahrens zur Herstellung des Mikroaktors wird das flüssigkeitsabsorbierende Material in zuvor hergestellte strukturierte Vertiefungen in einem strukturierbaren Substrat gerakelt. Unter Rakeln versteht man im Folgenden das Aufbringen oder Einbringen des flüssigkeitsabsorbierenden Materials auf oder in eine Kavität in dem Substrat mit einer Rakel, welche wenigstens eine glatte Kante besitzt, welche über das Substrat bewegt wird. Auf diese Weise kann das flüssigkeitsabsorbierende Material so aufgebracht werden, dass seine Oberfläche ungefähr mit der Substratoberfläche eine Ebene bildet.

Mögliche Ausführungsvarianten, deren Wirkungsweise sowie Vorteile der vorliegenden Erfindung werden im Folgenden anhand der Figuren der Zeichnung beschrieben. Dabei zeigen:
- Figur 1: eine schematische Darstellung eines Mikroaktors gemäß einer ersten Ausführungsform der vorliegenden Erfindung;
- Figur 2: eine schematische Darstellung eines Mikroaktors gemäß einer zweiten Ausführungsform der vorliegenden Erfindung;
- Figur 3: eine schematische Darstellung eines Mikroaktors gemäß einer dritten Ausführungsform der vorliegenden Erfindung;
- Figur 4: eine schematische Darstellung eines Mikroaktors gemäß einer vierten Ausführungsform der vorliegenden Erfindung;
- Figur 5 bis Figur 8: eine schematische Darstellung eines erfindungsgemäßen Verfahrens zum Herstellen eines Mikroaktors gemäß einer fünften Ausführungsform der Erfindung;
- Figur 9: eine schematische Darstellung eines Verfahrens zum Bewegen eines Fluids mit einem Mikroaktor gemäß einer sechsten Ausführungsform der vorliegenden Erfindung;
- Figur 10: eine schematische Darstellung eines Verfahrens zum Bewegen eines Fluids mit einem Mikroaktor gemäß einer siebenten Ausführungsform der vorliegenden Erfindung;
- Figur 11: eine schematische Darstellung eines Verfahrens zum Bewegen eines Fluids mit einem Mikroaktor gemäß einer achten Ausführungsform der vorliegenden Erfindung;
- Figur 12 bis Figur 14: eine schematische Darstellung eines Verfahrens zum Bewegen eines Fluids mit einem Mikroaktor gemäß einer neunten Ausführungsform der vorliegenden Erfindung;
- Figur 15 bis Figur 21: eine schematische Darstellung eines erfindungsgemäßen Verfahrens zum Herstellen eines Mikroaktors mittels Rakeln in Kavitäten gemäß einer zehnten und einer elften Ausführungsform der Erfindung;
- Figur 22 und 23: schematische Darstellungen des Aufbaus und der Funktionsweise eines Mikroaktors zur Beeinflussung der Bewegung eines Fluids in Form eines Ventils gemäß einer zwölften Ausführungsform der vorliegenden Erfindung;
- Figur 24 und 25: schematische Darstellungen des Aufbaus und der Funktionsweise eines Mikroaktors zur Beeinflussung der Bewegung eines Fluids in Form eines Ventils gemäß einer dreizehnten Ausführungsform der vorliegenden Erfindung;
- Figur 26 und 27: schematische Darstellungen des Aufbaus und der Funktionsweise eines als Membranpumpe verwendbaren Mikroaktors gemäß einer vierzehnten Ausführungsform der vorliegenden Erfindung; und
- Figur 28 und 29: schematische Darstellungen des Aufbaus und der Funktionsweise einer Anordnung mehrerer erfindungsgemäßer Mikroaktoren zur Realisierung einer peristaltischen Pumpe gemäß einer fünfzehnten Ausführungsform der vorliegenden Erfindung.

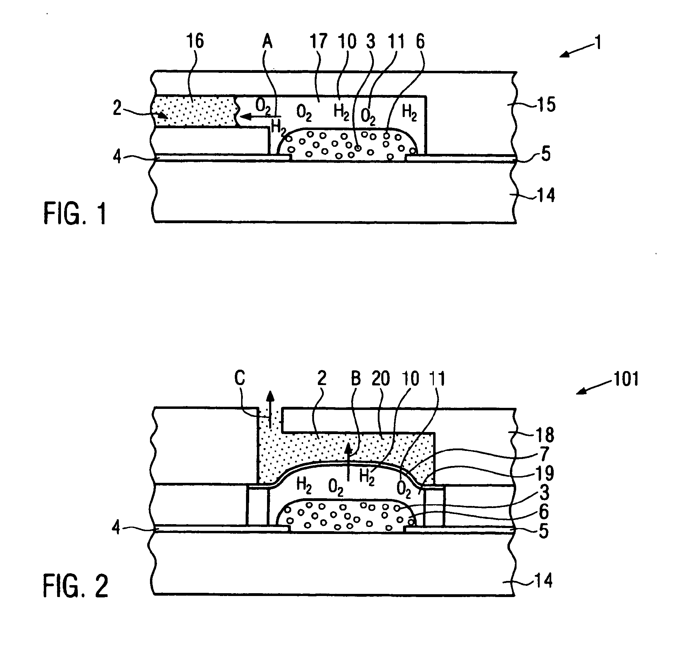

Figur 1 zeigt eine schematische Darstellung einer ersten möglichen Ausführungsvariante eines erfindungsgemäßen Mikroaktors 1. Der Mikroaktor 1 weist ein Substrat 14 auf, das im gezeigten Ausführungsbeispiel aus Glas besteht. In anderen, nicht gezeigten Ausführungsbeispielen der Erfindung kann das Substrat 14 auch aus einem anderen geeigneten Trägermaterial, wie Silizium, Keramik oder Kunststoff wie z.B. PMMA, Polycarbonat, Polypropylen, Polyethylen, einem Cycloolefin-Copolymer, einem Ormocer, bestehen.

Auf dem Substrat 14 sind zwei Elektroden 4, 5 aufgebracht, welche eine Aktorflüssigkeit 3 kontaktieren, die in ein flüssigkeitsabsorbierendes Material eingebracht ist. In dem in Figur 1 gezeigten Beispiel bestehen die Elektroden 4, 5 aus Gold, können jedoch in anderen, nicht gezeigten Ausführungsformen der Erfindung z.B. auch aus Aluminium, Platin, Nickel, Kupfer oder einem anderen Metall sowie auch z.B. aus einem leitfähigen Polymer bestehen. Die Elektroden 4, 5 besitzen typischerweise eine Schichtdicke von etwa 100nm bis zu einigen Mikrometern. In einer hier nicht gezeigten Ausführungsform kann sich unter den Elektroden auch noch eine Isolations- und/oder Haftvermittlerschicht befinden.

Die Aktorflüssigkeit 3 ist eine Wasser enthaltende Flüssigkeit. Das fllüssigkeitsabsorbierende Material ist in dem in Figur 1 gezeigten Beispiel ein Hydrogel 6 und kann in anderen Ausführungsformen der Erfindung auch ein anderes, zur Flüssigkeitsaufnahme und -speicherung geeignetes Material sein.

Das Hydrogel 6 ist in dem in Figur 1 gezeigten Beispiel ein superabsorbierendes Polymer, welches Polyacrylsäure aufweist. In anderen, nicht gezeigten Beispielen der Erfindung kann das Hydrogel 6 auch ein thermisch stimulierbares Hydrogel aufweisen, welches ab einer bestimmten Temperatur beginnt, das in ihm gespeicherte Wasser abzugeben oder aufzunehmen.

Das Hydrogel 6 ist so auf den Elektroden 4, 5 aufgebracht, dass zumindest Endbereiche der Elektroden 4, 5 von dem Wasser enthaltenden Hydrogel 6 mit diesen in Kontakt sind. Typischerweise besitzt das Hydrogel 6 eine Dicke zwischen einigen Mikrometern bis zu einigen Millimetern und eine Ausdehnung zwischen (10 x 10) µm² bis zu (20 x 20) mm².

Auf dem Substrat 14 mit den Elektroden 4, 5 und dem Hydrogel 6 mit der Aktorflüssigkeit 3 ist eine Mikrostruktur 15 aufgebracht, die wenigstens einen Kanal 16 für das von dem Mikroaktor 1 zu bewegende Fluid 2 aufweist.

Wird in der Aktorflüssigkeit 3 eine Elektrolyse erzeugt, bilden sich Sauerstoff- und Wasserstoff-Gasblasen 10, 11, welche einen Raum 17 zwischen dem Hydrogel 6 und dem zu bewegenden Fluid 2 einnehmen und somit das Fluid 2 entsprechend der mit dem Pfeil A gezeigten Richtung von dem Hydrogel 6 wegdrücken.

Figur 2 zeigt auf schematische Weise das Grundprinzip einer zweiten möglichen Ausführungsvariante eines erfindungsgemäßen Mikroaktors 101.

Der Mikroaktor 101 weist wie der Mikroaktor 1 ein Substrat 14 und darauf angeordnete Elektroden 4, 5 auf, zwischen welchen ein eine Aktorflüssigkeit 3 enthaltendes flüssigkeitsabsorbierendes Material in Form eines Hydrogels 6 vorgesehen ist. Bezüglich der Eigenschaften und Anordnung dieser Komponenten des Mikroaktors 101 wird auf die obigen Ausführungen zu diesen Komponenten im Zusammenhang mit dem Mikroaktor 1 verwiesen.

Auf dem Substrat 14 mit den Elektroden 4, 5 und dem die Aktorflüssigkeit 3 enthaltenden Hydrogel 6 ist eine Mikrostruktur 18 vorgesehen. Diese Mikrostruktur 18 weist eine Membran 7 auf, die in dem in Figur 2 gezeigten Beispiel oberhalb des Hydrogels 6 vorgesehen ist. Zwischen dem Hydrogel 6 und der Membran 7 ist ein Freiraum 19 vorgesehen, in welchen Gas 10, 11, das aus der Aktorflüssigkeit 3 während einer Elektrolyse austritt, eintreten kann.

Die Membran 7 besteht in dem gezeigten Beispiel aus Polydimethylsiloxan (PDMS) und kann durch die bei der Elektrolyse entstehenden Gasblasen 10, 11 in die mit dem Pfeil B angedeutete Richtung gedehnt werden. In einem hier nicht dargestellten Ausführungsbeispiel kann die Membran auch aus einem anderen Silikon, aus Parylen, aus einem mittels Plasmapolymerisation über dem flüssigkeitsabsorbierenden Material abgeschiedenen Polymer oder einem anderen Material mit für die Aktorfunktionalität ausreichender Elastizität bestehen.

Oberhalb der Membran 7 ist in der Mikrostruktur 18 ein Kanal 20 für das von dem Mikroaktor 101 zu bewegende Fluid 2 vorgesehen. Bewegt sich die Membran 7 durch die bei der Elektrolyse der Aktorflüssigkeit 3 aus dem Hydrogel 6 austretenden Gasblasen 10,11, wie durch den Pfeil B gezeigt, in Richtung des Fluids 2 in dem Kanal 20, wird das Fluid 2 entsprechend der mit dem Pfeil C angedeuteten Bewegungsrichtung weggedrängt.

Wird in den in Figur 1 und 2 gezeigten Vorrichtungen die Elektrolyse durch Unterbrechen der Stromversorgung der Elektroden 4, 5 beendet, so stoppt die Erzeugung von Gasblasen 10, 11. Dabei bleibt jedoch das bereits erzeugte Gas 10, 11 in den Kanälen 16, 20 größtenteils erhalten. Damit bleibt das Fluid 2 an der bis dahin erreichten Position stehen.

Wird in den Mikroaktoren 1, 101 ein Katalysator in oder an dem die Aktorflüssigkeit 3 enthaltenden Hydrogel 6 vorgesehen, kann eine Rückwärtsreaktion von Wasserstoff 10 und Sauerstoff 11 zu Wasser ermöglicht werden, das dann wiederum in dem Hydrogel 6 gebunden werden kann. Ein solcher Katalysator kann beispielsweise aus Platin oder Palladium bestehen. Beispielsweise können die Elektroden 4, 5 als Katalysator verwendet werden und aus Platin oder Palladium hergestellt werden.

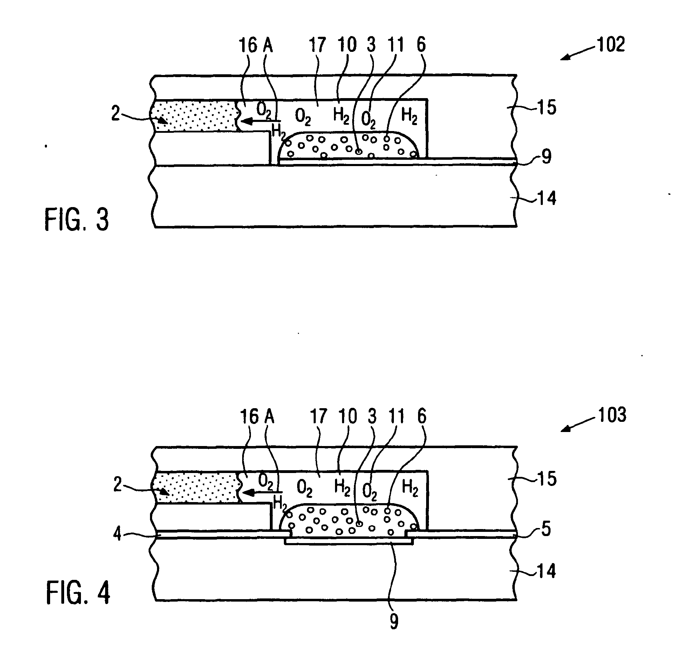

Figur 3 zeigt schematisch den Aufbau einer dritten möglichen Variante eines erfindungsgemäßen Mikroaktors 102. In dem Mikroaktor 102 ist auf dem Substrat 14 wenigstens ein Heizelement 9 in Form einer Heizelektrode vorgesehen, auf welcher das die Aktorflüssigkeit enthaltende Hydrogel 6 vorgesehen ist. Wird das Heizelement 9 geheizt, wird das Hydrogel 6 thermisch aktiviert, wobei in der Aktorflüssigkeit 3 thermische Blasen entstehen. Das aus der Aktorflüssigkeit 3 in Form von Blasen entweichende Gas 10, 11 wird dann verwendet, um das in dem Kanal 16 enthaltene Fluid 2 zu verdrängen.

Figur 4 zeigt schematisch ein viertes Ausführungsbeispiel eines erfindungsgemäßen Mikroaktors 103. Der Mikroaktor 103 ist eine Kombination aus den in Figur 1 und Figur 3 gezeigten Ausführungsbeispielen. Der Mikroaktor 103 weist sowohl die in der Ausführungsform von Figur 1 dargestellten Elektroden 4, 5 als auch das in der Ausführungsform von Figur 3 enthaltene Heizelement 9 auf. Somit kann das in dem Hydrogel 6 enthaltene Wasser sowohl thermisch als auch durch Elektrolyse zur Blasenbildung angeregt werden, womit das Fluid 2 aus dem Kanal 16 gedrängt werden kann.

Die in den Figuren 3 und 4 dargestellten Ausführungsvarianten sind auch mit der in Figur 2 dargestellten Mikrostruktur 18 mit der Membran 7 herstellbar.

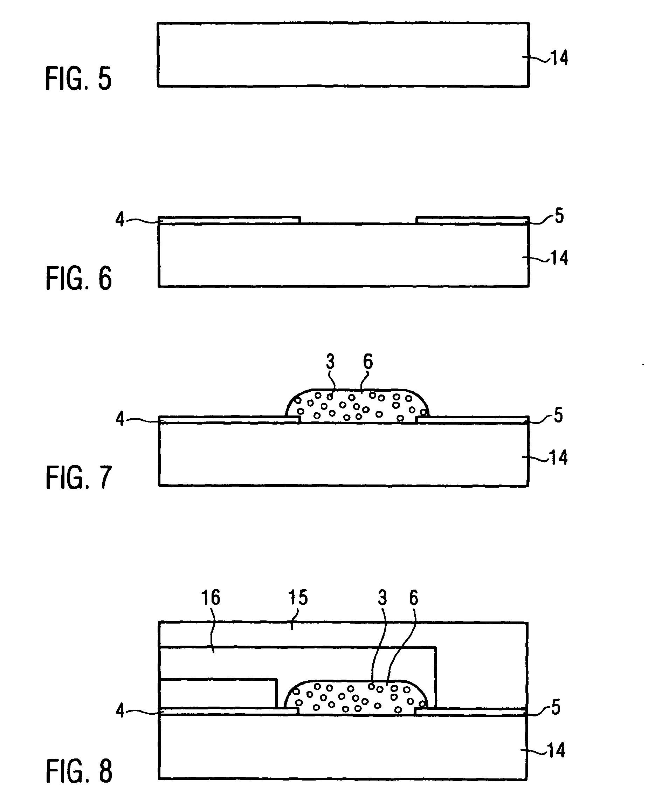

Die Figuren 5 bis 8 zeigen schematisch Schritte eines exemplarischen Technologieablaufs zur Herstellung des in Figur 1 gezeigten Mikroaktors 1 gemäß einer fünften Ausführungsform der vorliegenden Erfindung.

Wie in Figur 5 gezeigt, wird zunächst das Substrat 14 bereitgestellt.

Entsprechend Figur 6 werden auf das Substrat 14 beispielsweise mittel Sputtern, Bedampfen oder Galvanisieren die Elektroden 4 und 5 aufgebracht.

Im Hinblick auf Figur 7 wird zwischen die Elektroden 4, 5 das die Aktorflüssigkeit 3 enthaltende Hydrogel 6 beispielsweise in einem Siebdruckverfahren oder Rakelverfahren aufgebracht.

Nachfolgend wird, wie in Figur 8 gezeigt, eine Mikrostruktur 15 auf die in Figur 7 gezeigte Struktur aufgebracht. Die Mikrostruktur 15 ist eine vorgefertigte mikrostrukturierte Struktur, zwischen welcher und der in Figur 7 gezeigten Struktur der Kanal 16 für das Fluid 2 ausgebildet wird.

Anstatt der Mikrostruktur 15 kann die in Figur 7 gezeigte Struktur auch mit einer Mikrostruktur 18 entsprechend Figur 2 zusammengefügt werden, wobei die Mikrostruktur 18 zusätzlich zu der Mikrostruktur 15 die bewegliche Membran 7 aufweist, die durch aus der Aktorflüssigkeit 3 erzeugbare Gase 10, 11 beeinflussbar ist.

Gemäß einer weiteren, nicht gezeigten Herstellungsvariante der Erfindung kann anstelle der Elektroden 4, 5 wenigstens ein Heizelement 9, wie in Figur 3 gezeigt, vorgesehen werden. Mit dem Heizelement 9 kann die in dem Hydrogel 6 enthaltene Aktorflüssigkeit 3 thermisch aktiviert werden, so dass sich thermische Blasen bilden, mit welchen das in dem Kanal 16 enthaltene Fluid 2 weggedrückt werden kann.

Entsprechend einer weiteren, nicht gezeigten Herstellungsvariante kann wenigstens ein Heizelement 9 in Kombination mit den Elektroden 4, 5, wie in Figur 4 gezeigt, in einem Mikroaktor 103 integriert werden, wobei das Hydrogel 6 ein thermisch stimulierbares bzw. thermisch sensibles Hydrogel ist. Durch eine thermische Aktivierung des thermisch stimulierbaren Hydrogels 6 mittels des Heizelementes 9 kann die Aktorflüssigkeit 3 bzw. das in ihr enthaltene Wasser wenigstens teilweise aus dem Hydrogel 6 in einen dem Hydrogel 6 vorgelagerten Raum 17 austreten, wo es dann entweder thermisch oder mittels der Elektroden 4, 5 zur Blasenbildung angeregt werden kann.

Dabei ist es auch möglich, dass ein thermisch stimulierbares Hydrogel 6 verwendet wird, welches nur bei niedrigen Temperaturen die Aktorflüssigkeit 3 freigibt und bei höheren Temperaturen die Aktorflüssigkeit 3 speichert, so dass bei geringeren Temperaturen die Aktorflüssigkeit durch die Elektroden 4, 5 mittels Elektrolyse zur Blasenbildung angeregt wird und bei höheren Temperaturen eine Blasenbildung unterbleibt.

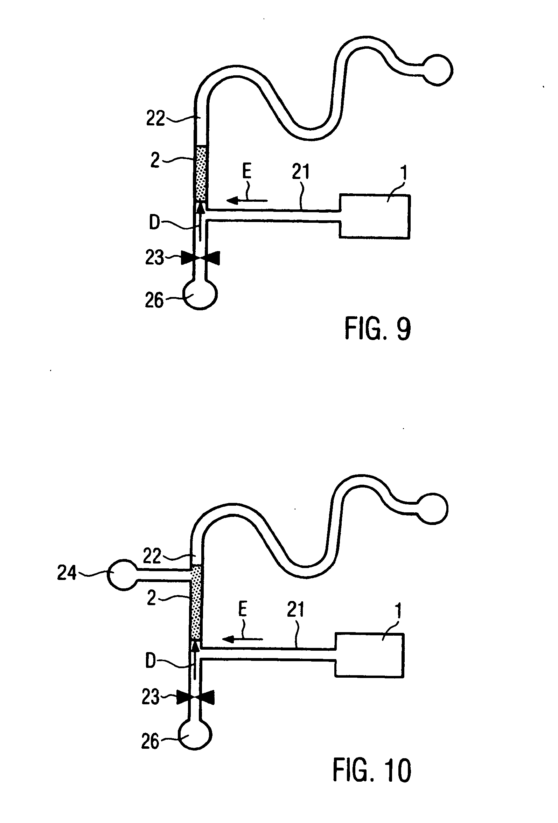

Figur 9 zeigt schematisch ein Verfahren zum Bewegen des Fluids 2 mit dem Mikroaktor 1, der in anderen Ausführungsformen auch der Mikroaktor 101, 102 oder 103 sein kann, gemäß einer sechsten Ausführungsform der vorliegenden Erfindung.

Der Mikroaktor 1 wird verwendet, um das Fluid 2, das sich in dem Kanal 22 befindet, in dem hier gezeigten Beispiel gemäß der mit dem Pfeil D angedeuteten Bewegungsrichtung nach oben zu bewegen. Eine Bewegung des Fluids 2 in dem gezeigten Beispiel nach unten ist durch das Vorsehen eines Ventils 23 abgeschnitten. Ein Rückfluss des Fluids 2 zu dem Mikroaktor 1 ist in dem in Figur 9 gezeigten Beispiel nicht möglich, da der Kanal 21, welcher sich ausgehend von dem Mikroaktor 1 zum Kanal 22 erstreckt, hydrophob ist, so dass das zu bewegende Fluid 2 hier nicht eindringen kann. Entsprechend kann eine Gasblasenausbildung in dem Mikroaktor 1 dazu genutzt werden, mit Hilfe des entstehenden Gases das Fluid 2 in dem Kanal 22 nach oben zu bewegen.

Figur 10 zeigt eine weitere mögliche Ausführungsvariante des erfindungsgemäßen Verfahrens zum Bewegen des Fluids 2 unter Nutzung des Mikroaktors 1, der hier ebenfalls auch durch den Mikroaktor 101, 102 oder 103 ersetzt werden kann, gemäß einer siebenten Ausführungsform der vorliegenden Erfindung.

Nach der in Figur 10 dargestellten Ausführungsvariante soll hier das Fluid 2 durch die von dem Mikroaktor 1 zur Verfügung gestellte Aktorwirkung nur bis zu einer bestimmten Position transportiert werden. An dem Kanal 22 ist, in der Figur 10 zur Veranschaulichung links dargestellt, ein Kanal 24 vorgesehen, aus dem Gas 10, 11 entweichen kann. Der Kanal 24 ist in dem dargestellten Beispiel wie auch der Kanal 21 hydrophob, so dass das Fluid 2 weder in den Kanal 24 noch in den Kanal 21 eindringen kann. Tritt in dem Mikroaktor 1 eine Gasblasenerzeugung ein, wird das entstehende Gas 10, 11 durch den Kanal 21 in die durch den Pfeil E angedeutete Bewegungsrichtung geleitet, wo das Gas schließlich auf das Fluid 2 trifft und dieses nach oben drückt. In dem dargestellten Beispiel kann das Fluid 2 bis maximal zu der durch den Kanal 24 vorgegebenen Endposition gedrückt werden, da durch den Kanal 24 das Gas entweichen kann.

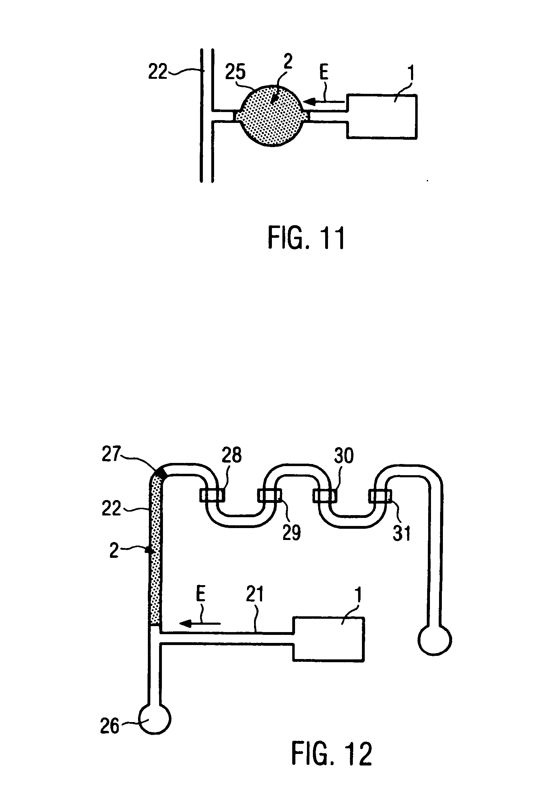

Figur 11 zeigt eine nächste Ausführungsvariante des erfindungsgemäßen Verfahrens zum Bewegen des Fluids 2 unter Nutzung des Mikroaktors 1, der in anderen Ausführungsformen auch durch den Mikroaktor 101, 102 oder 103 ersetzt werden kann, gemäß einer achten Ausführungsform der vorliegenden Erfindung.

In Figur 11 ist direkt im Anschluss an eine Ausgangsöffnung des Mikroaktors 1 ein Reservoir 25 vorgesehen, das mit dem Fluid 2 gefüllt ist. Durch Wirkung des Mikroaktors 1 kann in der durch den Pfeil F vorgegebenen Bewegungsrichtung das Reservoir 25 entleert werden.

Die Figuren 12 bis 14 zeigen eine weitere Ausführungsform des erfindungsgemäßen Verfahrens zum Bewegen des Fluids 2 durch den Mikroaktor 1, der in anderen Ausführungsformen der Erfindung auch durch den Mikroaktor 101, 102 oder 103 ersetzt werden kann, gemäß einer neunten Ausführungsform der vorliegenden Erfindung.

Wie in Figur 12 schematisch gezeigt, befindet sich in dem Kanal 22 das Fluid 2, das durch einen Einlass 26 in den Kanal 22 gebracht wurde. Zwischen dem Mikroaktor 1 und dem Kanal 22 ist ein hydrophober Druckkanal 21 vorgesehen, durch welchen Gas, das in dem Mikroaktor 1 erzeugt wird, in Richtung des Kanals 22 fließt.

Die Bewegung des Fluids 2 in dem Kanal 22 wird nach oben durch einen hydrophoben Bereich 27 begrenzt. Der hydrophobe Bereich 27 in dem Kanal 22 dient damit als Stopp für eine kapillare Befüllung des Kanals 22.

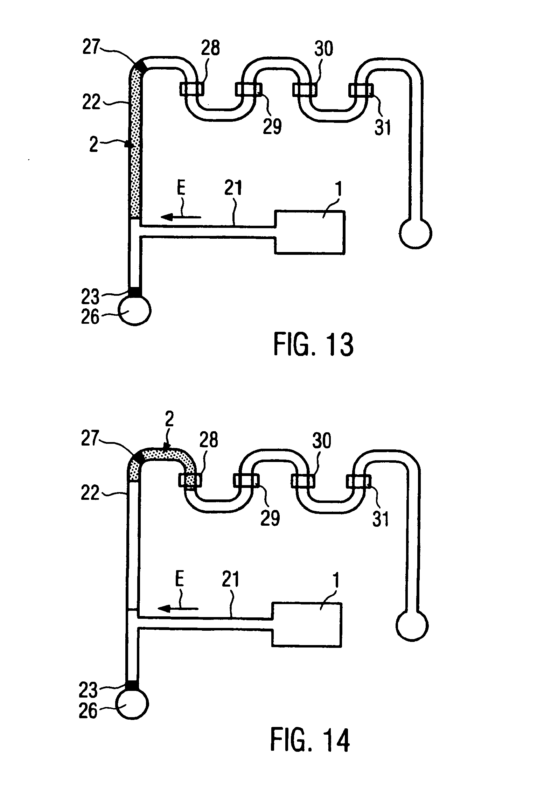

Wie in Figur 13 gezeigt, wird in einem weiteren Schritt ein Ventil 23 oberhalb des Einlasses 26 in dem Kanal 22 geschlossen. Hierdurch kann sich in dem Kanal 22 unterhalb des Fluids 2 ein Druck durch das aus dem Kanal 21 hinzugeführte Gas 10, 11 aufbauen. Anstelle des Ventils 23 kann der Einlass 26 auch mittels eines Deckels, durch Quellen eines Hydrogels, durch Ausdehnen einer elastischen Matrix, die ausdehnbare Mikrosphären enthält, oder andere Verschlussmechanismen verschlossen werden.

Figur 14 zeigt schematisch einen nächsten Schritt zum Ausführen des erfindungsgemäßen Verfahrens zum Bewegen des Fluids 2 mit dem Mikroaktor 1. Wie in Figur 14 gezeigt, wird der durch den Mikroaktor 1 aufgebaute Druck dazu verwendet, das Fluid 2 über den hydrophoben Stopp 27 hinaus weiter zu bewegen. Im weiteren Verlauf des Kanals 22 sind an diesem Kanal 22 Sensorflächen 28, 29, 30, 31 vorgesehen, über welche das Fluid 2 durch den aufgebauten Druck gedrückt wird. Somit ist es möglich, das Fluids 2 biologischen, chemischen oder physikalischen Analysen and den Sensorflächen 28,29,30,31 zu unterziehen.

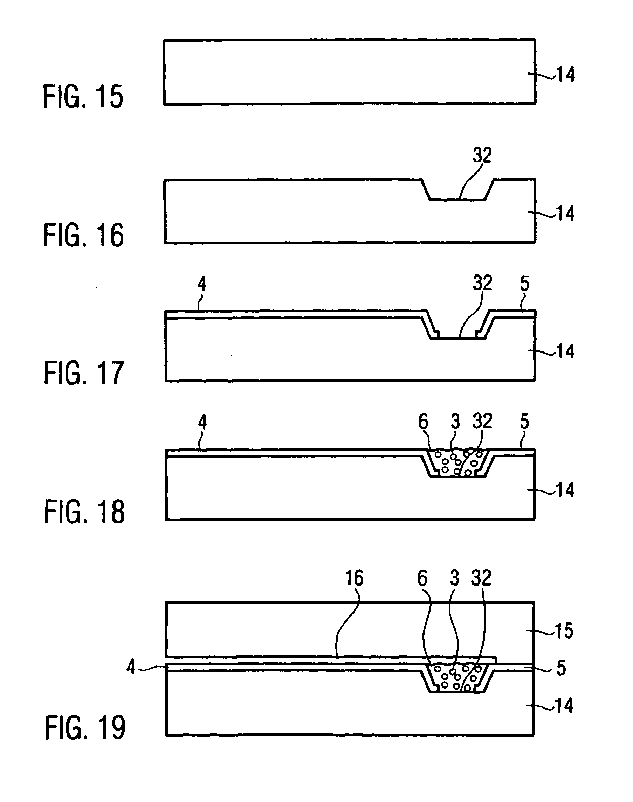

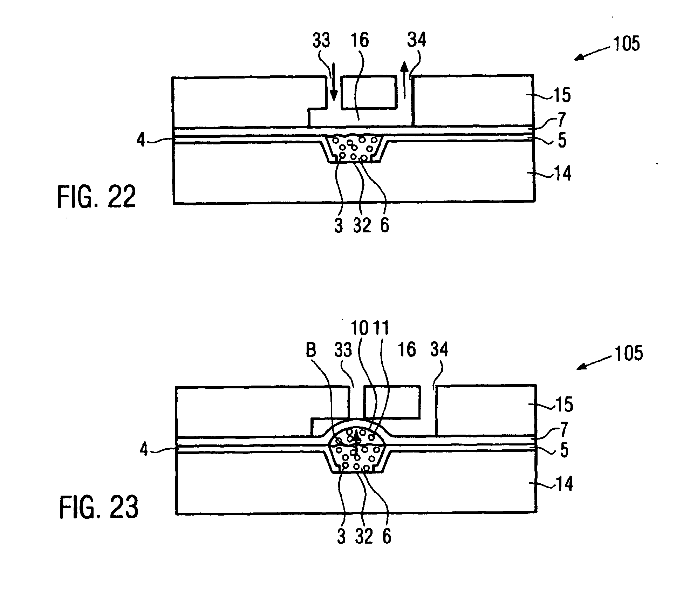

Figur 15 bis Figur 21 zeigen anhand schematischer Darstellungen das Grundprinzip eines erfindungsgemäßen Verfahrens gemäß einer zehnten und einer elften Ausführungsform der Erfindung zum Herstellen eines Mikroaktors 104 bzw. eines in den Figuren 22 und 23 dargestellten Mikroaktors 105. Da einige der in dieser Verfahrensvariante verwendeten Schritte und Materialien mit Schritten und Materialien des oben im Hinblick auf das in den Figuren 5 bis 8 beschriebenen Verfahrens gleich sind, werden im folgenden gleiche Bezugszeichen verwendet, um gleiche Merkmale zu bezeichnen.

Wie in Figur 15 gezeigt, wird zunächst das Substrat 14 bereitgestellt.

Entsprechend Figur 16 wird in das Substrat 14, beispielsweise mittels Heißprägen, mindestens eine Vertiefung 32 eingebracht.

Gemäß einer weiteren, hier nicht gezeigten Herstellungsvariante kann das Substrat 14 auch bereits strukturiert bereitgestellt werden, wie dies z.B. im Spritzguss- oder Reaktionsguss-Verfahren möglich ist.

Entsprechend Figur 17 werden auf das Substrat 14 beispielsweise mittels Sputtern, Bedampfen oder Galvanisieren die Elektroden 4 und 5 aufgebracht.

In dem in Figur 18 dargestellten Verfahrensschritt wird in die Vertiefung 32 zwischen die Elektroden 4, 5 das die Aktorflüssigkeit 3 enthaltende Hydrogel 6 beispielsweise in einem Siebdruckverfahren oder einem Rakelverfahren aufgebracht.

Nachfolgend wird gemäß der zehnten Ausführungsform der vorliegenden Erfindung, wie in Figur 19 gezeigt, eine Mikrostruktur 15 auf die in Figur 18 gezeigte Struktur aufgebracht, um den Mikroaktor 104 auszubilden. Die Mikrostruktur 15 ist eine vorgefertigte mikrostrukturierte Struktur, zwischen welcher und der in Figur 18 gezeigten Struktur der Kanal 16 für das Fluid 2 ausgebildet wird.

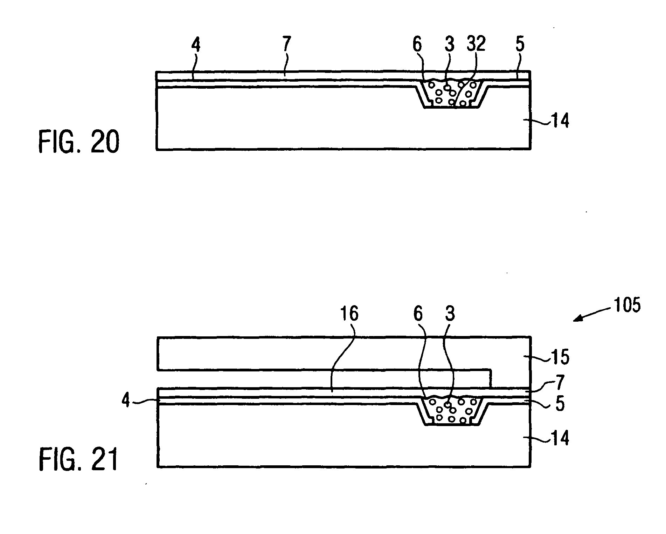

Anstelle der in Figur 19 dargestellten Vorgehensweise kann gemäß der elften Ausführungsform der vorliegenden Erfindung auf die in Figur 18 gezeigte Struktur zunächst, wie in Figur 20 gezeigt, die Membran 7 aufgebracht werden. Nachfolgend wird, wie in Figur 21 gezeigt, die in Figur 18 gezeigte Struktur mit der Mikrostruktur 15 entsprechend zusammengefügt. Grundsätzlich ist es auch möglich, dass eine Mikrostruktur mit der Membran 7 vorgefertigt wird und diese dann mit der in Figur 18 gezeigten Struktur zusammengefügt wird.

In dem im Hinblick auf die Figuren 15 bis 21 beschriebenen Technologieablauf kann anstelle der oder zusätzlich zu den Elektroden 4, 5 wenigstens ein Heizelement 9, wie in Figur 3 oder 4 gezeigt, vorgesehen werden, um die in Bezug auf die Figuren 3 und 4 erläuterten Eigenschaften für den Mikroaktor 104 oder 105 zu erzielen.

Figur 22 und 23 zeigen schematische Darstellungen des Aufbaus und der Funktionsweise einer Ausführungsvariante des in Figur 21 dargestellten Mikroaktors 105 zur Beeinflussung der Bewegung eines Fluids 2 in Form eines Ventils gemäß einer zwölften Ausführungsform der vorliegenden Erfindung

In dem in Figur 22 dargestellten Mikroaktor 105 sind in der Mikrostruktur 15 für den das Fluid 2 enthaltenden Kanal 16 ein Einlasskanal 33 und ein Auslasskanal 34 für das Fluid 2 vorgesehen. Der Einlasskanal 33 befindet sich oberhalb der in dem Sunstrat 14 vorgesehenen Vertiefung 32 mit dem Hydrogel 6 und der darüber angeodneten dehnbaren Membran 7. Wie in Figur 22 gezeigt, kann das Fluid 2 durch den Einlasskanal 33 in den Mikroaktor 105 eingebracht werden, darin durch den Kanal 16 strömen und durch den Auslasskanal 34 wieder aus dem Mikroaktor 105 austreten.

Bewegt sich die Membran 7 durch die bei einer Elektrolyse oder durch thermische Anregung der Aktorflüssigkeit 3 aus dem Hydrogel 6 austretenden Gasblasen 10, 11, wie durch den Pfeil B gezeigt, in Richtung des Einlasskanals 33, bis es diesen verschließt, wird das Fluid 2 daran gehindert, durch den Kanal 16 zu strömen. Wird die Gasblasenausbildung 10, 11 unterbrochen, bleibt zunächst der Einlasskanal verschlossen. Durch eine in dem Hydrogel 6, beispielsweise mittels eines oben beschriebenen Katalysators 8 auslösbare Rückwärtsreaktion der Gasblasen zu Wasser, kann die Membran wieder in Richtung ihrer ursprünglichen, in Figur 22 gezeigten Position zurückbewegt werden, wodurch der Einlasskanal 33 wieder geöffnet werden kann.

Wird der Auslasskanal 34 oberhalb der Vertiefung 32 mit dem Hydrogel 6 und der darüber befindlichen dehnbaren Membran 7 angeordnet, kann das beschriebene Ventilprinzip ebenso verwendet werden, um den Auslasskanal 34 zu schließen oder zu öffnen.

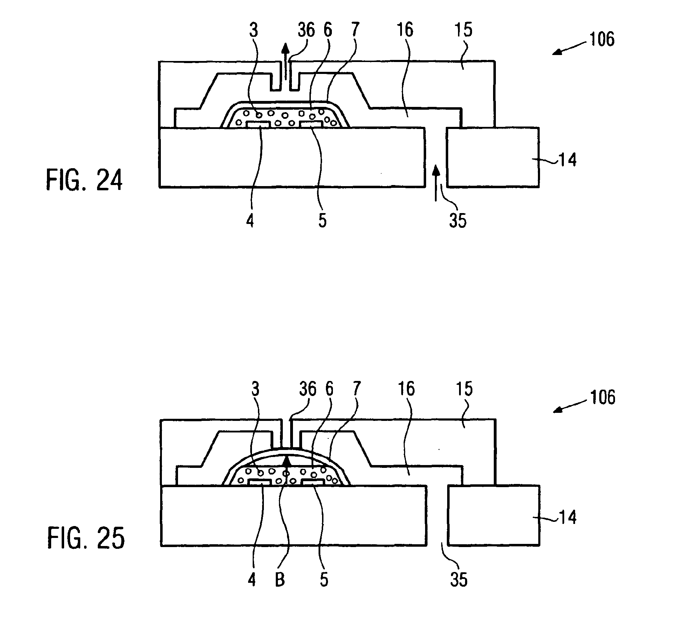

Figur 24 und 25 zeigen schematische Darstellungen des Aufbaus und der Funktionsweise eines Mikroaktors 106 in Form eines Ventils gemäß einer dreizehnten Ausführungsform der vorliegenden Erfindung zur Beeinflussung der Bewegung eines Fluids 2.

Der Mikroaktor 106 weist einen Einlasskanal 35 für das Fluid 2 durch das Substrat 14 und einen Auslasskanal 36 für das Fluid 2 in der Mikrostruktur 15 oberhalb einer durch eine Aktivierung eines darunter befindlichen, eine Aktorflüssigkeit 3 enthaltenden Hydrogels 6 dehnbaren Membran 7 auf. Wie in Figur 24 gezeigt, kann das Fluid 2 durch den Einlasskanal 35 in den Mikroaktor 106 eingebracht werden, darin durch den Kanal 16 strömen und durch den Auslasskanal 36 wieder aus dem Mikroaktor 106 austreten. Bewegt sich die Membran 7 durch die bei einer Elektrolyse oder thermischen Anregung der Aktorflüssigkeit 3 aus dem Hydrogel 6 austretenden Gasblasen 10, 11, wie durch den Pfeil B in Figur 25 gezeigt, in Richtung des Auslasskanals 36, bis es diesen verschließt, wird das Fluid 2 daran gehindert, durch den Kanal 16 zu strömen.

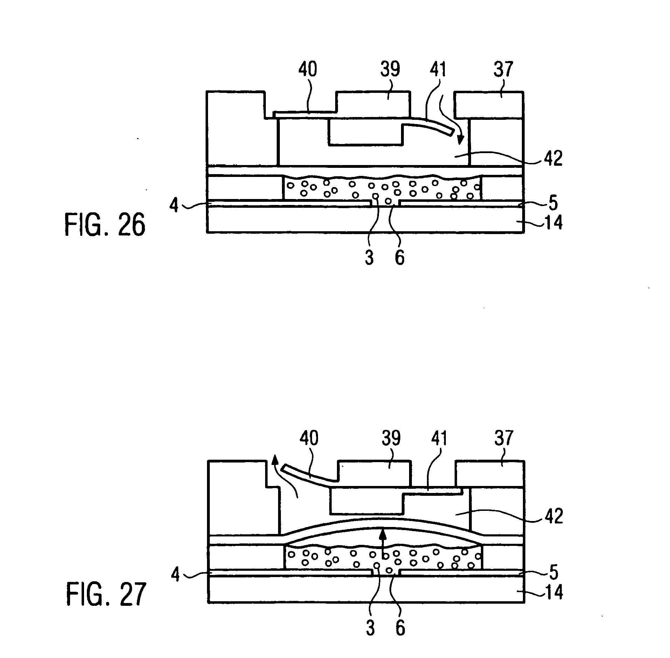

Figur 26 und 27 beinhalten schematische Darstellungen des Aufbaus und der Funktionsweise eines als Membranpumpe verwendbaren Mikroaktors gemäß einer vierzehnten Ausführungsform der vorliegenden Erfindung.

Der Mikroaktor ist aus einem Substrat 14, darauf aufgebrachten Elektroden 4, 5, einem zwischen und oberhalb der Elektroden 4, 5 aufgebrachten, die Aktorflüssigkeit 3 enthaltenden Hydrogel 6, einer darüber vorgesehenen Membran 7 und einer mit dieser Struktur zusammengefügten Mikrostruktur 37 aufgebaut. Die Mikrostruktur 37 weist ein oberhalb des dehnbaren Bereiches der Membran 7 angeordnetes Ventilelement auf. Das Ventilelement besteht in dem gezeigten Beispiel aus einem etwa mittig über dem dehnbaren Bereich der Membran 7 befindlichen unbeweglichen Block 39 und seitlich des Blocks 39, noch über dem dehnbaren Bereich der Membran 7 angeordneten Cantilevern 40, 41. Der Cantilever 41 bildet eine Einlassventilklappe für das Fluid 2 aus, das bei einer geöffneten Einlassventilklappe in eine oberhalb der Membran 7 in der Mikrostruktur 37 vorgesehene Pumpkammer 42 gelangen kann. Der Cantilever 42 bildet eine Auslassventilklappe für das Fluid 2 aus, das bei geöffnete Auslassventilklappe aus der Pumpkammer 42 und damit aus dem Mikroaktor 107 austreten kann.

Bewegt sich die Membran 7 durch die bei einer Elektrolyse oder durch thermische Anregung der Aktorflüssigkeit 3 aus dem Hydrogel 6 austretenden Gasblasen 10, 11, wie durch den Pfeil B gezeigt, nach oben, schließt sich die zuvor offene, nach innen öffnende Einlassventilklappe 41 und ein in der Pumpkammer 42 befindliches Fluid 2 wird durch den Überdruck durch das nach außen öffnende Auslassventil 40 gedrückt. Bewegt sich die Membran 7 zurück, so schließt sich die nach außen öffnende Auslassventilklappe 40 und die nach innen öffnende Einlassventilklappe 41 öffnet sich, wodurch weiteres Fluid 2 in die Pumpkammer 42 strömen kann.

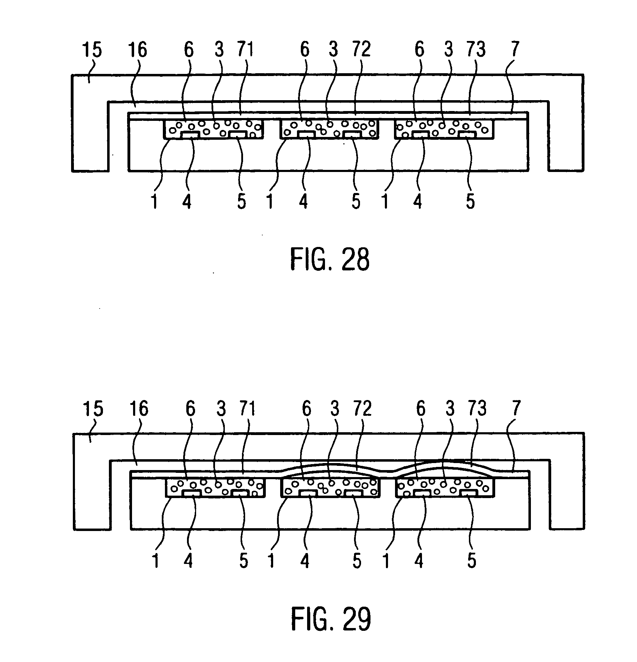

Figur 28 und 29 zeigen schematische Darstellungen des Aufbaus und der Funktionsweise einer Anordnung mehrerer erfindungsgemäßer Mikroaktoren 1, welche in anderen Ausführungsformen der Erfindung auch entsprechend der Mikroaktoren 101, 102, 103, 104, 105, 106 aufgebaut sein können, zur Realisierung einer peristaltischen Pumpe gemäß einer fünfzehnten Ausführungsform der vorliegenden Erfindung.

Wie in Figur 28 gezeigt, sind in einem Substrat 14 mehrere Mikroaktoren 1 mit darüber vorgesehenen dehnbaren Bereichen 71, 72, 73 einer Membran 7 nebeneinander angeordnet, wobei unter den Bereichen 71, 72, 73 jeweils mit Elektroden 4, 5 und/oder Heizelementen 9 kontaktierbare, die Aktorflüssigkeit 3 enthaltende Bereiche eines flüssigkeitsabsorbierenden Materials, wie einem Hydrogel 6, vorgesehen sind. Bewegen sich die Membranen 71, 72, 73 durch die bei einer Elektrolyse oder durch thermische Anregung der Aktorflüssigkeit 3 aus dem Hydrogel 6 austretenden Gasblasen 10, 11, wie durch den Pfeil B gezeigt, periodisch und zeitlich versetzt nach oben und wieder zurück, kann eine peristaltische Pumpwirkung erreicht werden.

Es ist zudem möglich, einzelne der oben beschriebenen Ausführungsformen der erfindungsgemäßen Mikroaktoren 1, 101, 102, 103, 104, 105, 106 oder weiterer, nicht gezeigter Ausführungsvarianten sowie der beschriebenen Aktoreinsatzmöglichkeiten miteinander vorteilhaft zu kombinieren. Beispielsweise können mehrere der erfindungsgemäßen Mikroaktoren in einem fluidischen System als Pumpe(n) und Ventil(e) Verwendung finden oder in Form mehrerer Pumpen oder mehrerer Ventile in verschiedenen Systemen eingesetzt werden. Zudem ist eine Zusammenschaltung und Ansteuerung mehrerer Membran-Mikroaktoren, wie dem Mikroaktor in Figur 2 oder Figur 21, als Membranpumpe, wie in den Figuren 26 und 27 gezeigt, möglich. Ebenso können mehrere erfindungsgemäße Membran-Mikroaktoren, wie die in Figur 2 oder Figur 21 schematisch gezeigten Mikroaktoren, als Peristaltikpumpe, wie in Figur 28 und 29 gezeigt, zusammengeschaltet und angesteuert werden.

## Patentansprüche

1. Mikroaktor (1, 101, 102, 103, 104, 105, 106) zum Bewegen oder zur Steuerung der Bewegung eines Fluids (2) mit Gasblasen (10, 11) aus einer zumindest teilweise Wasser enthaltenden Aktorflüssigkeit (3), **dadurch gekennzeichnet, dass** die Aktorflüssigkeit (3) in einem flüssigkeitsabsorbierenden Material gespeichert ist und eine Einrichtung zur Erzeugung der Gasblasen (10, 11) aus der Aktorflüssigkeit (3) aufweist, wobei die Einrichtung wenigstens ein Heizelement (9) und/oder Elektroden (4,5) in elektrischem leitfähigen Kontakt mit der Aktorflüssigkeit (3) aufweist.

2. Mikroaktor nach Anspruch 1, **dadurch gekennzeichnet, dass** das flüssigkeitsabsorbierende Material ein Hydrogel (6) umfasst.

3. Mikroaktor nach Anspruch 2, **dadurch gekennzeichnet, dass** das Hydrogel (6) ein superabsorbierendes Polymer umfasst.

4. Mikroaktor nach Anspruch 3, **dadurch gekennzeichnet, dass** das superabsorbierende Polymer Polyacrylsäure umfasst.

5. Mikroaktor nach zumindest einem der vorhergehenden Ansprüche 1 bis 4, **dadurch gekennzeichnet, dass** der Mikroaktor (101, 105, 106) eine in Kontakt mit dem Fluid (2) bringbare, dehnbare Membran (7) aufweist.

6. Mikroaktor nach Anspruch 5, **dadurch gekennzeichnet, dass** der Mikroaktor (105, 106) wenigstens einen durch die Membran (7) zumindest teilweise verschließbaren Kanal (33, 36) aufweist.

7. Mikroaktor nach Anspruch 5, **dadurch gekennzeichnet, dass** der Mikroaktor wenigstens eine bewegliche Ventilklappe (40, 41) aufweist, wobei zwischen der Ventilklappe (40, 41) und der Membran (7) ein Pumpenraum (42) für das Fluid (2) ausgebildet ist.

8. Mikroaktor nach Anspruch 7, **dadurch gekennzeichnet, dass** der Mikroaktor eine bei nicht gedehnter Membran (7) in den Pumpenraum (42) nach innen öffnende und bei gedehnter Membran (7) einen Kanal schließende Ventilklappe (41), und eine bei gedehnter Membran (7) einen Kanal schließende und bei nicht gedehnter Membran (7) den Pumpenraum (42) nach außen öffnende Ventilklappe (40) aufweist.

9. Mikroaktor nach zumindest einem der Ansprüche 2 bis 8, **dadurch gekennzeichnet, dass** das Hydrogel (6) mit einem Katalysator gekoppelt ist.

10. Mikroaktor nach Anspruch 8, **dadurch gekennzeichnet, dass** der Katalysator Platin oder Palladium umfasst.

11. Lab-on-Chip-System, **dadurch gekennzeichnet, dass** das Lab-on-Chip-System einen Mikroaktor (1) nach zumindest einem der Ansprüche 1 bis 10 aufweist.

12. Verfahren zum Bewegen oder zur Steuerung einer Bewegung eines Fluids (2) mit einem Mikroaktor (1, 101 ,102, 103, 104, 105, 106) mit Gasblasen (10, 11) aus einer zumindest teilweise Wasser enthaltenden Aktorflüssigkeit (3), **dadurch gekennzeichnet, dass** die Aktorflüssigkeit (3) in einem flüssigkeitsabsorbierenden Material gespeichert wird und in der Aktorflüssigkeit (3) wenigstens ein Gas (10, 11) erzeugt wird, mit welchem das Fluid (2) direkt oder mittelbar bewegt wird oder die Bewegung des Fluids (2) direkt oder mittelbar gesteuert wird, wobei das wenigstens eine Gas thermisch und/oder durch Elektrolyse erzeugt wird.

13. Verfahren nach Anspruch 12, **dadurch gekennzeichnet, dass** die Aktorflüssigkeit (3) in einem Hydrogel (6) gespeichert wird.

14. Verfahren nach Anspruch 12 oder 13, **dadurch gekennzeichnet, dass** das bei der Elektrolyse erzeugte Gas (10, 11) auf eine Membran (7) des Mikroaktors (1) wirkt, welche das Fluid (2) bewegt oder die Bewegung des Fluids steuert.

15. Verfahren nach zumindest einem der Ansprüche 12 bis 14, **dadurch gekennzeichnet, dass** mit einem Katalysator eine Rückwärtsreaktion der bei der Elektrolyse entstehenden Gase (10, 11) zu Wasser bewirkt wird.

16. Verfahren zum Herstellen eines Mikroaktors (1) zum Bewegen oder zur Steuerung der Bewegung eines Fluids (2) mit Gasblasen (10, 11) aus einer Aktorflüssigkeit (3), **dadurch gekennzeichnet, dass** die Aktorflüssigkeit (3) in einem flüssigkeitsabsorbierenden Material gespeichert wird, dass das flüssigkeitsabsorbierende Material in den Mikroaktor (1) integriert wird und der Mikroaktor (1) eine Einrichtung zur Erzeugung der Gasblasen (10, 11) aus der Aktorflüssigkeit (3) vorgesehen werden, wobei die Einrichtung wenigstens ein Heizelement (9) und/oder Elektroden (4, 5) in elektrisch leitfähigem Kontakt mit der Aktorflüssigkeit (3) aufweist.

## Claims

1. A micro-actuator (1,101, 102, 103, 104, 105, 106) for moving or for controlling the movement of a fluid (2) with gas bubbles (10, 11) from an actuator liquid (3) containing at least partially water, **characterised in that** the actuator liquid (3) is stored in a liquid-absorbent material and has a device for generating the gas bubbles (10, 11) from the actuator liquid (3), the device having at least one heating element (9) and/or electrodes (4, 5) in electrically conductive contact with the actuator liquid (3).

2. The micro-actuator according to claim 1, **characterised in that** the liquid-absorbent material comprises a hydrogel (6).

3. The micro-actuator according to claim 2, **characterised in that** the hydrogel (6) comprises a super-absorbent polymer.

4. The micro-actuator according to claim 3, **characterised in that** the super-absorbent polymer comprises polyacrylic acid.

5. The micro-actuator according to at least one of the preceding claims 1 to 4, **characterised in that** the micro-actuator (101, 105, 106) has an expandable membrane (7) that can be brought into contact with the fluid (2).

6. The micro-actuator according to claim 5, **characterised in that** the micro-actuator (105, 106) has at least one channel (33, 36) at least partially closeable by the membrane (7).

7. The micro-actuator according to claim 5, **characterised in that** the micro-actuator has at least one moveable valve flap (40, 41), a pump space (42) for the fluid (2) being formed between the valve flap (40, 41) and the membrane (7).

8. The micro-actuator according to claim 7, **characterised in that** the micro-actuator has a valve flap (41) opening inwardly into the pump space (42) when the membrane (7) is not extended and closing a channel when the membrane (7) is extended, and a valve flap (40) closing a channel when the membrane (7) is extended and opening the pump space (42) outwardly when the membrane (7) is not extended.

9. The micro-actuator according to at least one of claims 2 to 8, **characterised in that** the hydrogel (6) is coupled to a catalyst.

10. The micro-actuator according to claim 8, **characterised in that** the catalyst comprises platinum or palladium.

11. A lab-on-a-chip system, **characterised in that** the lab-on-a-chip system has a micro-actuator (1) according to at least one of claims 1 to 10.

12. A method for moving or for controlling a movement of a fluid (2) with a micro-actuator (1, 101, 102, 103, 104, 105, 106) with gas bubbles (10, 11) from an actuator liquid (3) at least partially containing water, **characterised in that** the actuator liquid (3) is stored in a liquid-absorbent material and at least one gas (10, 11) is generated in the actuator liquid (3) with which the fluid (2) is moved directly or indirectly, or the movement of the fluid (2) is controlled directly or indirectly, the at least one gas being generated thermally and/or by electrolysis.

13. The method according to claim 12, **characterised in that** the actuator liquid (3) is stored in a hydrogel (6).

14. The method according to claim 12 or 13, **characterised in that** the gas (10, 11) generated by electrolysis acts on a membrane (7) of the micro-actuator (1) which moves the fluid (2) or controls the movement of the fluid.

15. The method according to at least one of claims 12 to 14, **characterised in that** a reverse reaction of the gases (10, 11) generated by electrolysis to water is brought about with a catalyst.

16. A method for producing a micro-actuator (1) for moving or for controlling the movement of a fluid (2) with gas bubbles (10, 11) from an actuator liquid (3), **characterised in that** the actuator liquid (3) is stored in a liquid-absorbent material, that the liquid-absorbent material is integrated into the micro-actuator (1), and the micro-actuator (1) is provided with a device for generating the gas bubbles (10, 11) from the actuator liquid (3), the device having at least one heating element (9) and/or electrodes (4, 5) in electrically conductive contact with the actuator liquid (3).

## Revendications

1. Microactionneur (1, 101, 102, 103, 104, 105, 106) pour le déplacement ou la commande du déplacement d'un fluide (2) avec des bulles de gaz (10, 11) provenant d'un fluide actionneur (3) contenant au moins en partie de l'eau, **caractérisé en ce que** le fluide actionneur (3) est stocké dans un matériau absorbeur de liquide et **en ce que** le microactionneur comporte un dispositif pour la production des bulles de gaz (10, 11) à partir du fluide actionneur (3), le dispositif comportant au moins un élément chauffant (9) et/ou des électrodes (4, 5) en contact électrique avec le fluide actionneur (3).

2. Microactionneur selon la revendication 1, **caractérisé en ce que** le matériau absorbeur de liquide comprend un hydrogel (6).

3. Microactionneur selon la revendication 2, **caractérisé en ce que** l'hydrogel (6) comprend un polymère superabsorbant.

4. Microactionneur selon la revendication 3, **caractérisé en ce que** le polymère superabsorbant comprend des acides polyacryliques.

5. Microactionneur selon au moins l'une des revendications précédentes 1 à 4, **caractérisé en ce que** le microactionneur (101, 105, 106) comporte une membrane (7) extensible pouvant être amenée en contact avec le fluide (2).

6. Microactionneur selon la revendication 5, **caractérisé en ce que** le microactionneur (105, 106) comporte au moins un canal (33, 36) pouvant être au moins partiellement obturé par la membrane (7).

7. Microactionneur selon la revendication 5, **caractérisé en ce que** le microactionneur comporte au moins un clapet de soupape (40, 41) mobile, un espace de pompage (42) pour le fluide (2) étant prévu entre le clapet de soupape (40, 41) et la membrane (7).

8. Microactionneur selon la revendication 7, **caractérisé en ce que** le microactionneur comporte un clapet de soupape (41) qui ouvre vers l'intérieur dans l'espace de pompage (42) lorsque la membrane (7) n'est pas étendue et qui ferme un canal lorsque la membrane (7) est étendue et un clapet de soupape (40) qui ferme un canal lorsque la membrane (7) est étendue et qui ouvre vers l'extérieur l'espace de pompage (42) lorsque la membrane (7) n'est pas étendue.

9. Microactionneur selon au moins l'une des revendications 2 à 8, **caractérisé en ce que** l'hydrogel (6) est couplé à un catalyseur.

10. Microactionneur selon la revendication 8, **caractérisé en ce que** le catalyseur comprend du platine ou du palladium.

11. Système de laboratoire sur puce, **caractérisé en ce que** le système de laboratoire sur puce comporte un microactionneur (1) selon au moins l'une des revendications 1 à 10.

12. Procédé pour le déplacement ou la commande du déplacement d'un fluide (2) avec un microactionneur (1, 101, 102, 103, 104, 105, 106) avec des bulles de gaz (10, 11) provenant d'un fluide actionneur (3) contenant au moins en partie de l'eau, **caractérisé en ce que** le fluide actionneur (3) est stocké dans un matériau absorbeur de liquide et **en ce qu'**au moins un gaz (10, 11) est produit dans le fluide actionneur (3), gaz avec lequel le fluide (2) est déplacé directement ou indirectement ou avec lequel le déplacement du fluide (2) est commandé directement ou indirectement, le ou les gaz étant produit(s) par un procédé thermique et/ou par électrolyse.

13. Procédé selon la revendication 12, **caractérisé en ce que** le fluide actionneur (3) est stocké dans un hydrogel (6).

14. Procédé selon la revendication 12 ou 13, **caractérisé en ce que** le gaz (10, 11) produit lors de l'électrolyse agit sur une membrane (7) du microactionneur (1), laquelle membrane déplace le fluide (2) ou commande le déplacement du fluide.

15. Procédé selon au moins l'une des revendications 12 à 14, **caractérisé en ce qu'**une réaction inverse des gaz (10, 11) produits lors de l'électrolyse vers de l'eau est provoquée avec un catalyseur.

16. Procédé de fabrication d'un microactionneur (1) pour le déplacement ou la commande du déplacement d'un fluide (2) avec des bulles de gaz (10, 11) provenant d'un fluide actionneur (3), **caractérisé en ce que** le fluide actionneur (3) est stocké dans un matériau absorbeur de liquide, **en ce que** le matériau absorbeur de liquide est intégré dans le microactionneur (1) et **en ce que** le microactionneur (1) comporte un dispositif pour la production de bulles de gaz (10, 11) à partir du fluide actionneur (3), le dispositif comportant au moins un élément chauffant (9) et/ou des électrodes (4, 5) en contact électrique avec le fluide actionneur (3).
